# EUROPEAN PATENT SPECIFICATION

(11) **EP 0 508 532 B1**
(45) Date of publication and mention of the grant of the patent: **23.08.1995**
(21) Application number: 92200948.5
(22) Date of filing: 03.04.1992
(51) Int. Cl.: B65G 47/26

(54) **A conveyor and a method for operating a conveyor**
Förderer und Verfahren zum Betreiben eines Förderers
Transporteur et procédé pour commander un transporteur

(30) Priority: 10.04.1991 NL 9100626
(43) Date of publication of application: 14.10.1992
(73) Proprietor: VANDERLANDE INDUSTRIES NEDERLAND B.V., NL-5466 RB Veghel (NL)
(72) Inventor: van den Goor, Jakobus Marie, NL-5674 SH Nuenen (NL)
(74) Representative: Vollebregt, Cornelis Jacobus, Ir.

(56) References cited:
- EP-A- 0 199 063
- NL-A- 8 500 265

## Description

The invention relates to a method for operating a conveyor provided with drivable conveying means for moving objects across said conveyor, said conveying means being subdivided into several fields located one behind the other when seen in the intended direction of movement of the objects, and near each field a sensor being arranged so as to detect the presence of an object in the field in question, all this in such a manner that when a sensor detects an object in a first field, said sensor activates means for interrupting a driving force being exerted on an object in a second field located upstream of said first field.

Conveyors provided with drivable conveying means, which are subdivided into several fields located one behind the other in the direction of movement of the objects, which fields can be controlled by means of object-detecting sensors, such as feelers or photoelectric cells or the like, in such a manner that they exert or do not exert a driving force on an object present in a respective field, are generally known.

The parts driving the objects can thereby be formed by rollers acting directly or indirectly, via belts or chains, on the objects or only by belts or chains. The driving parts may thereby be moved to and fro between a position in which they exert a driving force on the objects and a position in which they are not in contact with the objects. Also it is possible to stop the driving parts, so as to interrupt a driving force being exerted on an object, and set said parts moving again when an object is to be moved along.

With the conventional construction, when a sensor detects an object in a certain field, a field located upstream thereof, when seen in the intended direction of movement of the objects, is put out of action, i.e. a driving force being exerted on an object in the field in question is interrupted by suitable means.

In this way conveyors can be obtained wherein, when the regular discharge of an object is interrupted, the driving forces being exerted on the objects coming behind said object are controlled in such a manner that the objects come to a standstill one behind the other, close to each other or in abutment with each other. Such conveyors function satisfactorily when objects having substantially the same dimensions, in particular in longitudinal direction, are moved by means of the conveyors, whereby the arrangement of the sensors and the dimensions of the fields can be adapted to the dimensions of said objects.

However, in those cases where objects having varying dimensions are moved problems may arise, because e.g. an object stopped in a certain field does not necessarily co-operate with the sensor associated with the field in question so as to interrupt a driving force being exerted on an object in a field located further upstream, so that the object coming from said upstream field may collide with the stationary object and only then activate the sensor so as to interrupt a driving force being exerted in the field located further upstream.

According to the invention, when the means interrupting a driving force being exerted on an object present in a first field have been activated, a driving force being exerted on an object present in the second field is interrupted, both when the presence of an object in the first field is dectected by means of said sensor and when the presence of an object in the second field is detected by means of a sensor.

By using the construction according to the invention it is achieved that when in the first field a stationary object is present, which does not activate the sensor associated with the field in question, the sensor associated with the second field, upon being activated, interrupts a driving force being exerted on an object present in said second field, so that the intended accumulating action of the conveyor can be obtained after all, without the objects colliding with each other with undesirable force.

The invention will be explained in more detail hereafter with reference to an embodiment of the construction according to the invention diagrammatically illustrated in the accompanying Figures.

Figure 1 diagrammatically shows the arrangement of several fields, located one behind the other, of a conveyor.

Figure 2 diagrammatically shows the pneumatically operating control mechanism, by means of which the driving parts arranged in the various fields can be shifted between a driving position and a non-driving position with respect to the objects.

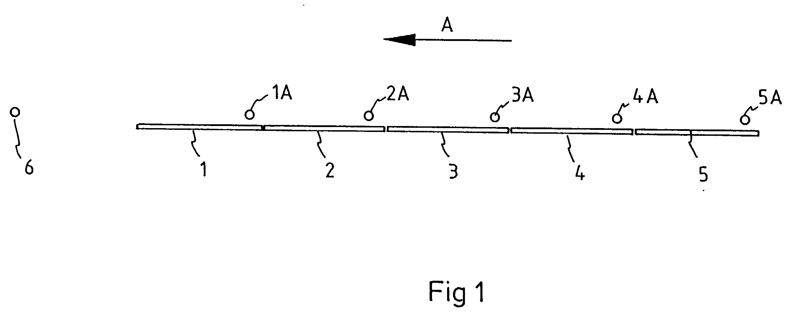

As is diagrammatically illustrated in Figure 1 a conveyor comprises a number of fields located one behind behind the other, five of said fields 1 - 5 being shown in this Figure. It will be apparent, however, that the conveyor may also have a larger or a smaller number of fields.

One embodiment of such a conveyor is e.g. described in the applicant's prior Dutch Patent Application No. 8,900,877.

The intended direction of movement of the objects across the conveyor is indicated by means of the arrow A.

As is further illustrated in Figure 1, a means 6 is disposed near the discharge end of the conveyor, which means can be activated so as to apply a stop signal, as will be explained in more detail hereafter. Furthermore a sensor 1A - 5A is disposed near the upstream end of each field 1 - 5, so as to detect the presence of an object in the field in question.

Also the means 6 will generally be a sensor, e.g. in the shape of a photo-electric cell. It will be apparent, however, that it will e.g. also be possible to use mechanical sensors, in the shape of feelers or the like.

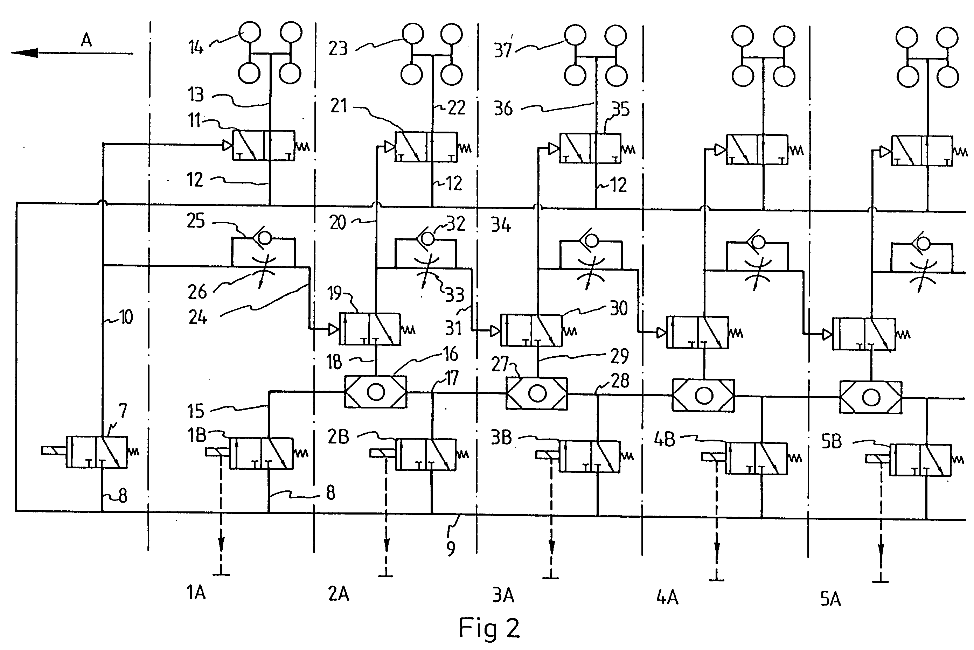

The sensor 6 is provided for the purpose of actuating a solenoid-control led regulating valve 7 (Figure 2), which is connected, via a connecting line 8, to a feed line 9 for the supply of pressurized air. In the illustrated position of the valve 7 said valve interrupts the connection between the branch line 8 and a further line 10, which is connected to one end of a spring-loaded control valve 11.

The valve 11 is connected to the air supply line 9 by means of a branch line 12. In the illustrated position of the valve 11 the line 9 is in open communication with a line 13 via the branch line 12 and the valve 11, by means of which line 13 air is supplied to setting means, e.g. air bellows 14, as described in the above-mentioned prior patent application, by means of which the parts disposed in the field 1, which drive the objects, are set in such a manner that a driving force is exerted on the objects present in the field 1.

When the sensor 6 detects the presence of an object, however, the solenoid-controlled valve 7 will be shifted from its position illustrated in Figure 2 to its other position, so that the air supply line 9 can be placed into communication with the valve 11 via the branch line 8, the valve 7 and the line 10, so as to shift said valve 11 into its other operating position, in which the connection between the line 9 and the line 13 is interrupted and the line 13 is placed into open communication with the atmosphere. Consequently the air will flow out of the setting means or air bellows 14 as well, so that the parts in field 1, which drive the objects, are influenced in such a manner that they no longer exert a driving force on an object present in the field.

Each of the sensors 1A - 5A is connected to a regulating valve 1B - 5B corresponding with the valve 7, whereby the valves 1B - 5B are connected to the air supply line 9 by means of a branch line 8, in a similar manner as the valve 7.

A line 15 is furthermore connected to the valve 1B, said line connecting said valve 1B to one end of a valve means 16, whilst the other end of the valve means 16 is connected to the valve 2B via a line 17. A further line 18 is connected to the valve means 16. The construction is thereby such that when pressurized air is supplied to the valve means 16 via the line 15, said pressurized air will be discharged via the line 18, whilst the valve means will shut off the connection between the lines 17 and 18. When, conversely, pressurized air is supplied via the line 17, said air will be passed to the line 18, whilst the connection between the lines 15 and 18 will be interrupted.

The end of the line 18 remote from the valve 16 is connected to a control valve 19. A line 20 is connected to the valve 19, said line being connected, in a manner similar to the way the line 10 is connected to the valve 11, to a valve 21 corresponding with the valve 11, said valve 21 via a line 22 being in communication with the setting means or air bellows 23 associated with the second field.

One end of the valve 19 is connected to the line 10 via a connecting line 24. In the illustrated embodiment a non-return valve 25 is provided in the connecting line, said non-return valve allowing a free flow of pressurized air from the line 10 to the valve 19, but preventing the flow-back of air from the valve 19 to the line 10. A throttle means 26 is connected in parallel to the non-return valve 25, however, said throttle means allowing a slow flow-back of pressurized air from the valve 19 in the direction of the line 10.

As furthermore appears from Figure 2, the line 17 is also connected to a valve 27 corresponding with the valve 16, which is also in communication, via a line 28, with the valve 3B associated with the third field and being controlled by the sensor 3A of said third field. A discharge line 29 corresponding with the line 18 is in turn connected to the valve 27, said discharge line 29 connecting the valve 27 to a valve 30 corresponding with the valve 19. Control air may be supplied to the valve 30 via a line 31 connected to one end of the valve 20 and corresponding with the line 24, said line 31 connecting the valve 30 to the line 20. Also here a non-return valve 32 is incorporated in the line 31, as well as a throttle means 33, the arrangement of said non-return valve 32 and said throttle means 33 corresponding with the arrangement of the non-return valve 25 and the throttle means 26.

Via a line 34 the valve 30 is furthermore connected to a valve 35 corresponding with one of the valves 11 and 21, said valve 35 being connected, by means of a connecting line 36, to the setting means or air bellows 37 for the purpose of actuating the driving parts of the third field. As will furthermore be apparent from Figure 2, the valves 21 and 35 are also connected to the air supply line 9, of course, by means of connecting lines 12.

As will furthermore be apparent from Figure 2 this lay-out of valves and connecting lines is repeated for the successive fields of the conveyor.

As already explained above, when the sensor 6 detects an object which is e.g. stopped at the end of the conveyor, said sensor applies a signal to the valve 7 so as to shift said valve into the position in which pressurized air is supplied from the line 9, via the line 10, to the valve 11, so as to put said valve 11 in such a position that the control means or air bellows for the parts of the conveyor driving the objects in the first field are set so as to interrupt a force being exerted on (an) object(s) present in the first field. At the same time pressurized air is supplied to the valve 19 via the line 24, so that said valve 19 is shifted from the position illustrated in Figure 2 to a position in which an open communication has been effected between the lines 18 and 20. When the sensor 1A associated with the first field 1 detects an object, a signal will be applied to the valve 1B, so that said valve is shifted from the position illustrated in Figure 2 to the position in which pressurized air is supplied from line 9 to the line 15 via the valve 1B and the connecting line 8. Said pressurized air will be supplied to the valve 21 via the valve 16 and the lines 18 and 20. As a result the valve 21 will be shifted from the position illustrated in Figure 2 to the position in which the pressurized air is released from the setting means 23 into the atmosphere. This in turn leads to the parts of the second field driving the objects being influenced in such a manner that said parts no longer exert a driving force on an object present in the second field.

This is the way an accumulating conveyor usually operates, and this operation also occurs when objects are present in the other fields, i.e. when an object is detected by a sensor associated with a certain field, the driving means of a second field located upstream thereof will be influenced in such a manner that said parts will no longer exert a driving force on an object present in said upstream field, as a study of the diagram shown in Figure 2 will show.

When handling objects of varying dimensions it may happen, however, that an object having a comparitively small length is present in the front end of the field 1, when seen in Figure 1, so that said object is no longer detected by the sensor 1A. With the conventional conveyor the driving parts of the second field 2 will continue to exert a driving force on an object present in the second field, so that there is a danger that said object coming from said second field 2 collides with great force with the object present in the field 1.

This drawback is overcome by the construction according to the invention. An object arriving in the field 2 is namely also detected by the sensor 2A associated with the field 2, upon which said sensor 2A applies a signal to the valve 2B so as to shift said valve into a position in which the valve 2B effects an open communication between the line 9 and the line 17. As a result of this pressurized air can flow from the line 9 to the valve 19 via the line 17, the valve 16 and the line 18.

As already explained above, when the sensor 6 has detected an object, the valve 19 has been shifted into a position in which an open communication is effected between the lines 18 and 20, and therefore the valve 21 will in turn be shifted from the position shown in Figure 2 to the position in which the setting means or air bellows 23 are placed in open communication with the atmosphere.

It will be apparent, therefore, that upon detection by the sensor 6 of the presence of an object at the discharge end of the field 1, both when an object is detected by the sensor 1A and when an object is detected by the sensor 2A of the field 2, the driving parts of the field 2 will be influenced in such a manner that said driving parts will no longer exert a driving force on an object present in the field 2.

A further study of Figure 2 will show that upon detection of the presence of an object by the sensor 1A associated with the field 1, both when an object is detected by the sensor 2A and when an object is detected by the sensor 3A, the driving parts of the field 3 will be influenced in such a manner that said driving parts will no longer exert a driving force on an object present in the field 3, etc.

By using the above-described embodiment it is possible to obtain a good control of the movement across the conveyor of objects having different dimensions, in such a manner that said objects will not collide with each other in an undesirable manner.

When the object activating the sensor 6 is removed, the valve 7 will return to its position shown in Figure 2 again, so that the connection between the lines 9 and 10 is interrupted and the pressurized air can flow out of the line 10. As a result of this also the valve 11 will return to its position illustrated in Figure 2, so that pressurized air will again be supplied to the setting means 14, as a result of which the driving parts forming part of the first field will exert a driving force on an object present in the field 1 again.

At the same time pressurized air can escape from the line 24 via the line 10. As a result of said escaping of air from the line 24 the valve 19 will return to the position shown in Figure 2 again, as a result of which the supply of pressurized air to the valve 21 is interrupted and also this valve 21 returns to the position shown in Figure 2. As a result of this pressurized air will be supplied to the setting means 23 again, so that also the parts of the field 2 driving the objects will be returned to their operative position.

Due to the fact that the throttle means 26 is provided in the line 24, the escaping of air from the line 24 will only take place in a gradual manner, so that a certain time delay will occur between the driving parts of the field 1 becoming operative and the driving parts of the field 2 becoming operative. It will be apparent that the same process will also occur when the fields located upstream of the field 1 are activated, so that gradually, one after the other, the objects present on the conveyor will be set moving again.

## Claims

1. A method for operating a conveyor provided with drivable conveying means for moving objects across said conveyor, said conveying means being subdivided into several fields (1-5) located one behind the other when seen in the intended direction of movement (A) of objects, and near each field a sensor (1A-5A) being arranged so as to detect the presence of an object in the field in question, all this in such a manner that when a sensor (1A) detects an object in a first field (1), said sensor (1A) activates means for interrupting a driving force being exerted on an object in a second field (2) located upstream of said first field, characterized in that when the means interrupting a driving force being exerted on an object present in the first field (1) has been activated, the driving force being exerted on an object present in the second field (2) is interrupted,
a) when the presence of an object in the first field (1) is detected by means of said sensor (1A) near said first field (1), and/or
b) when the presence of an object in the second field (2) is detected by means of a sensor (2A) near said second field (2).

2. A conveyor provided with drivable conveying means for moving objects across said conveyor, said conveying means being subdivided into several fields (1-5) located one behind the other when seen in the intended direction of movement of the objects, and near each field a sensor (1A-5A) being arranged so as to detect the presence of an object in the field in question, all this in such a manner that when a sensor (1A) detects an object in a first field (1), said sensor (1A) activates means for interrupting a driving force being exerted on an object in a second field (2) located upstream of said first field and wherein means for exerting a driving force on an object in the various fields (1-5) are shifted between an operative position and a non-operative position by means of setting means (14, 23, 37), to which pressurized fluid is supplied via control valves (11, 21, 35) shiftable between a first position, in which the setting means (14, 23, 37) are in open communication with a source of pressurized fluid (9) and a second position in which the setting means (14, 23, 37) are placed in open communication with the atmosphere, whilst the control valves (11, 21, 35) are controlled by means of a control fluid, which is supplied to the valves by means of sensor-controlled regulating valves (7, 1B, 2B, 3B), characterized in that the regulating valves (1B, 2B) associated with a first and a second field (1, 2) are connected to a control valve (21) associated with the second field (2) via a further control valve (19), which places the two regulating valves (1B, 2B) in communication with said control valve (21) associated with the second field (2) when a sensor (6) located downstream of the sensors (1A, 2A) of the first and the second fields (1, 2) detects the presence of an object.

3. A device according to claim 2, characterized in that in order to be shifted the further control valve (19) is actuacted by a control fluid, by means of which also the control valve (11) of the first field (1) can be actuated.

4. A device according to claim 2 or 3, characterized in that a non-return valve (25), which allows a fluid to pass in the direction of a further control valve (19), and a throttle means (26) are connected in parallel in the line (24) for supplying control fluid to the further control valve (19).

5. A device according to any one of the claims 2 - 4, characterized in that that line (31) for supplying control fluid to a further control valve (30) of a second field (3) is connected to the line (20) for supplying control fluid to a control valve (21) of a first field (2), at a point located downstream of the further control valve (19) incorporated in the line (20) for supplying control fluid to the control valve (21) of said first field (2).

## Patentansprüche

1. Verfahren zum Betreiben eines Förderers, der mit antreibbaren Fördereinrichtungen zur Bewegung von Gegenständen über den Förderer versehen ist, wobei die Fördereinrichtungen in diverse Felder (1-5) unterteilt sind, welche in der beabsichtigten Bewegungsrichtung (A) der Gegenstände eines hinter dem anderen angeordnet sind, und wobei in der Nähe eines jeden Feldes ein Sensor (1A-5A) angeordnet ist, um das Vorhandensein eines Gegenstandes im in Rede stehenden Feld zu detektieren, wobei all dies derart geschieht, daß dann, wenn ein Sensor (1A) einen Gegenstand in einem ersten Feld (1) detektiert, der Sensor (1A) Einrichtungen zum Unterbrechen einer Antriebskraft aktiviert, die auf einen Gegenstand in einem zweiten Feld (2) aufstromseitig des ersten Feldes ausgeübt wird, dadurch gekennzeichnet, daß dann, wenn die eine Antriebskraft, die auf einen im ersten Feld (1) vorhandenen Gegenstand ausgeübt wird, unterbrechenden Einrichtungen betätigt worden sind, die Antriebskraft, die auf einen im zweiten Feld (2) vorhandenen Gegenstand ausgeübt wird, unterbrochen wird,
a) wenn das Vorhandensein eines Gegenstandes im ersten Feld (1) von dem Sensor (1A) in der Nähe des ersten Feldes (1) detektiert wird und/oder
b) wenn das Vorhandensein eines Gegenstandes im zweiten Feld (2) von einem Sensor (2A) in der Nähe des zweiten Feldes (2) detektiert wird.

2. Förderer, der mit antreibbaren Fördereinrichtungen zum Bewegen von Gegenständen über den Förderer versehen ist, welche in diverse Felder (1-5) unterteilt sind, die in der beabsichtigten Bewegungsrichtung der Gegenstände eines hinter dem anderen angeordnet sind, wobei in der Nähe eines jeden Feldes ein Sensor (1A-5A) angeordnet ist, um das Vorhandensein eines Gegenstandes in dem in Rede stehenden Feld zu detektieren, wobei all dies derart geschieht, daß dann, wenn ein Sensor (1A) einen Gegenstand im ersten Feld (1) detektiert, der Sensor (1A) Einrichtungen zum Unterbrechen einer auf einen Gegenstand in einem zweiten Feld (2) aufstromseitig des ersten Feldes ausgeübten Antriebskraft betätigt und Einrichtungen zur Ausübung einer Antriebskraft auf einen Gegenstand in den diversen Feldern (1-5) mit Hilfe von Stelleinrichtungen (14, 23, 37) zwischen einer Betriebsstellung und einer Außerbetriebsstellung verschoben werden, wobei den Stelleinrichtungen unter Druck stehendes Strömungsmittel über Steuerventile (11, 21, 35) zugeführt wird, welche zwischen einer ersten Position, in der die Stelleinrichtungen (14, 23, 37) in offener Verbindung mit einer Quelle des unter Druck stehenden Strömungsmittels (9) stehen, und einer zweiten Position, in der die Stelleinrichtungen (14, 23, 37) in offene Verbindung mit der Atmosphäre gebracht sind, verschiebbar sind, wobei die Steuerventile (11, 21, 35) mit Hilfe eines Steuermittels gesteuert werden, das über sensorgesteuerte Regelventile (7, 1B, 2B, 3B) den Ventilen zugeführt wird, dadurch gekennzeichnet, daß die einem ersten und einem zweiten Feld (1, 2) zugeordneten Regelventile (1B, 2B) über ein weiteres Steuerventil (19) an ein Steuerventil (21) angeschlossen sind, das dem zweiten Feld (2) zugeordnet ist, wobei das weitere Steuerventil die beiden Regelventile (1B, 2B) mit dem dem zweiten Feld (2) zugeordneten Steuerventil (21) in Verbindung bringt, wenn ein abstromseitig von den Sensoren (1A, 2A) des ersten und zweiten Feldes (1, 2) angeordneter Sensor (6) das Vorhandensein eines Gegenstandes detektiert.

3. Vorrichtung nach Anspruch 2, dadurch gekennzeichnet, daß zum Verschieben das weitere Steuerventil (19) durch ein Steuermittel betätigt wird, mit Hilfe von dem auch das Steuerventil (11) des ersten Feldes (1) betätigt werden kann.

4. Vorrichtung nach Anspruch 2 oder 3, dadurch gekennzeichnet, daß ein Rückschlagventil (25), das ermöglicht, daß ein Strömungsmittel in Richtung eines weiteren Steuerventils (19) passieren kann, und eine Drosseleinrichtung (26) parallel in der Leitung (24) geschaltet sind, um Steuermittel dem weiteren Steuerventil (19) zuzuführen.

5. Vorrichtung nach einem der Ansprüche 2 bis 4, dadurch gekennzeichnet, daß die Leitung (31) zur Zuführung von Steuermittel zu einem weiteren Steuerventil (30) eines zweiten Feldes (3) an die Leitung (20) zur Zuführung von Steuermittel zu einem Steuerventil (21) eines ersten Feldes (2) an einem Punkt angeschlossen ist, der abstromseitig des weiteren Steuerventils (19) angeordnet ist, das in die Leitung (20) eingebaut ist, um Steuermittel dem Steuerventil (21) des ersten Feldes (2) zuzuführen.

## Revendications

1. Procédé de commande d'un convoyeur pourvu d'un moyen d'acheminement pouvant être entraîné pour déplacer des objets d'un bout à l'autre dudit convoyeur, ledit moyen d'acheminement étant subdivisé en plusieurs zones (1 à 5) situées l'une derrière l'autre lorsque l'on regarde dans le sens prévu du déplacement (A) des objets, un capteur (1A à 5A) étant disposé à proximité de chaque zone de manière à détecter la présence d'un objet dans la zone en question, tout ceci de telle manière que, lorsqu'un capteur (1A) détecte un objet dans une première zone (1), ledit capteur (1A) mette en fonction des moyens pour interrompre une force d'entraînement exercée sur un objet dans une deuxième zone (2) située en amont de ladite première zone, caractérisé en ce que, lorsque le moyen, servant à interrompre une force d'entraînement exercée sur un objet présent dans la première zone (1), a été mis en fonction, la force d'entraînement exercée sur un objet présent dans la deuxième zone (2) est interrompue,
a) lorsque la présence d'un objet dans la première zone (1) est détectée au moyen dudit capteur (1A) proche de ladite première zone (1), et/ou
(b) lorsque la présence d'un objet dans la deuxième zone (2) est détectée au moyen d'un capteur (2A) proche de ladite deuxième zone (2).

2. Convoyeur pourvu d'un moyen d'acheminement pouvant être entraîné pour déplacer des objets d'un bout à l'autre dudit convoyeur, ledit moyen d'acheminement étant subdivisé en plusieurs zones (1 à 5) situées l'une derrière l'autre lorsque l'on regarde dans le sens prévu du déplacement des objets, un capteur (1A à 5A) étant disposé à proximité de chaque zone de manière à détecter la présence d'un objet dans la zone en question, tout ceci de telle manière que, lorsqu'un capteur (1A) détecte un objet dans une première zone (1), ledit capteur (1A) mette en fonction des moyens pour interrompre une force d'entraînement exercée sur un objet dans une deuxième zone (2) située en amont de ladite première zone, et dans lequel des moyens servant à exercer une force d'entraînement sur un objet dans les diverses zones (1 à 5) sont déplacées entre une position active et une position non active au moyen de moyens de réglage (14, 23, 37) auxquels est fourni du fluide sous pression par l'intermédiaire de soupapes de commande (11, 21, 35) qui peuvent être commutées entre une première position, dans laquelle les moyens de réglage (14, 23, 37) communiquent avec une source de fluide sous pression (9), et une seconde position, dans laquelle les moyens de réglage (14, 23, 37) sont mis en communication avec l'atmosphère, tandis que les soupapes de commande (11, 21, 35) sont commandées au moyen d'un fluide de commande, qui est fourni aux soupapes au moyen de soupapes de régulation commandées par capteur (7, 1B, 2B, 3B), caractérisé en ce que les soupapes de régulation (1B, 2B) associées à une première et à une deuxième zones (1, 2) sont reliées à une soupape de commande (21) associée à la deuxième zone (2) par l'intermédiaire d'une soupape de commande supplémentaire (19), qui fait communiquer les deux soupapes de régulation (1B, 2B) avec ladite soupape de commande (21) associée à la deuxième zone (2) lorsqu'un capteur (6) situé en aval des capteurs (1A, 2A) des première et deuxième zones (1, 2) détecte la présence d'un objet.

3. Dispositif selon la revendication 2, caractérisé en ce que la soupape de commande supplémentaire (19) est actionnée par un fluide de commande qui permet également l'actionnement de la soupape de commande (11) de la première zone (1).

4. Dispositif selon la revendication 2 ou 3, caractérisé en ce qu'un clapet antiretour (25), qui permet à un fluide de passer en direction d'une soupape de commande supplémentaire (19), et un moyen d'étranglement (26) sont montés en parallèle dans la conduite (24) servant à fournir du fluide de commande à la soupape de commande supplémentaire (19).

5. Dispositif selon l'une quelconque des revendications 2 à 4, caractérisé en ce que la conduite (31), servant à fournir du fluide de commande à une soupape de commande supplémentaire (30) d'une deuxième zone (3), est reliée à la conduite (20) pour l'alimentation en fluide de commande d'une soupape de commande (21) d'une première zone (2), en un point situé en aval de la soupape de commande supplémentaire (19) incorporée dans la conduite (20) pour l'alimentation en fluide de commande de la soupape de commande (21) de ladite première zone (2).
